# EUROPÄISCHE PATENTSCHRIFT

(11) **EP 3 586 696 B1**
(45) Veröffentlichungstag und Bekanntmachung des Hinweises auf die Patenterteilung: **27.01.2021**
(21) Anmeldenummer: 19181117.3
(22) Anmeldetag: 19.06.2019
(51) Int. Cl.: A47J 31/46, F04B 17/04, F04B 53/14

(54) **GETRÄNKEPUMPE**
BEVERAGE PUMP
POMPE À BOISSON

(30) Priorität: 22.06.2018 DE 102018115119
(43) Veröffentlichungstag der Anmeldung: 01.01.2020
(73) Patentinhaber: Sysko AG, 7000 Chur (CH)
(72) Erfinder: Wißkirchen, Michael, 88410 Bad Wurzach (DE); Partzsch, Fred, 88099 Neukirch (DE); Wißkirchen, Florian, 88250 Weingarten (DE); Helbling, Norbert, 8645 Jona (CH)
(74) Vertreter: Daub, Thomas

(56) Entgegenhaltungen:
- EP-A1- 3 078 854
- EP-A1- 3 279 473
- DE-A1-102015 118 529
- US-A1- 2016 053 750

## Beschreibung

### Stand der Technik

Die Erfindung betrifft eine Getränkepumpe für ein Haushaltsgerät.

Aus der Druckschrift EP 3 279 473 A1 ist eine Getränkepumpe für ein Haushaltsgerät bekannt, insbesondere für einen Getränkeautomaten, zu einer Förderung einer Flüssigkeit, mit einem Arbeitskolben, welcher sich in einem magnetisch unbetätigten Zustand in einer definierten Ruhelage befindet, mit einer Pumpkammer, in welcher der Arbeitskolben axial beweglich geführt ist, mit einem Magnetaktor, der dazu vorgesehen ist, ein Magnetfeld zu einem Antrieb des Arbeitskolbens bereitzustellen, mit zumindest einer ersten Polhülse zu einer Leitung eines von dem Magnetaktor erzeugten magnetischen Flusses und mit zumindest einer zweiten Polhülse, die von der ersten Polhülse beabstandet angeordnet ist, zu einer Leitung eines von einem Magnetaktor erzeugten magnetischen Flusses.

Die Aufgabe der Erfindung besteht insbesondere darin, eine besonders effiziente und flexible Getränkepumpe bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Getränkepumpe für ein Haushaltsgerät, insbesondere für einen Getränkeautomaten, zu einer Förderung einer Flüssigkeit, mit einem Arbeitskolben, welcher sich in einem magnetisch unbetätigten Zustand in einer definierten Ruhelage befindet, mit einer Pumpkammer, in welcher der Arbeitskolben axial beweglich geführt ist, mit einem Magnetaktor, der dazu vorgesehen ist, ein Magnetfeld zu einem Antrieb des Arbeitskolbens bereitzustellen, mit zumindest einer ersten Polhülse zu einer Leitung eines von dem Magnetaktor erzeugten magnetischen Flusses und mit zumindest einer zweiten Polhülse, die von der ersten Polhülse beabstandet angeordnet ist, zu einer Leitung eines von einem Magnetaktor erzeugten magnetischen Flusses.

Es wird vorgeschlagen, dass die zweite Polhülse in der definierten Ruhelage des Arbeitskolbens axial entgegen einer Hauptströmungsrichtung der Flüssigkeit eine Kontaktfläche zwischen dem Arbeitskolben und der Pumpkammer zumindest teilweise überragt, wobei ein in der Pumpkammer wandgängiger Abschnitt des Arbeitskolbens in der definierten Ruhelage des Arbeitskolbens axial vollständig von der zweiten Polhülse übergriffen ist. Vorzugsweise bildet die Pumpkammer einen Zylinder für den Arbeitskolben aus, wobei eine Kontaktfläche insbesondere zwischen einer äußersten, insbesondere zylindrischen, Mantelfläche des Arbeitskolbens und einer inneren, insbesondere zylindrischen, Mantelfläche der Pumpkammer ausgebildet ist. Bevorzugt ist die Kontaktfläche insbesondere von einer Mantelfläche eines wandgängigen Abschnitts des Arbeitskolbens gebildet. Besonders bevorzugt ist die Kontaktfläche dabei insbesondere von einer Führungsfläche gebildet, welche zumindest teilweise, insbesondere abhängig von Führungs- und/oder Fertigungstoleranzen, zumindest temporär kontaktlos sein kann. Dadurch kann ein vorteilhafter Verlauf einer auf einen Anker wirkenden magnetischen Kraft erreicht werden. Es kann eine besonders effiziente Getränkepumpe bereitgestellt werden. Ferner kann dadurch insbesondere eine vorteilhaft schnelle Bewegung des Arbeitskolbens aus der definierten Ruhelage heraus erreicht werden. Hierdurch kann insbesondere eine vorteilhafte hohe Reaktionsgeschwindigkeit erreicht werden, sodass insbesondere Getränke, welche druckunabhängig abgegeben werden können, schnell gezapft werden können. Gleichzeitig kann insbesondere im Bereich von Kaffee, wie insbesondere in einem Druckbereich zwischen 8 bar und 16 bar, ein nahezu konstanter Durchfluss erreicht werden. Hierdurch kann wiederum erreicht werden, dass sich unterschiedliche Strömungswiderstände, wie beispielsweise von verschiedenen Kapseln, nicht auf eine Bezugszeit auswirken. Unter einem "Getränkeautomaten" soll in diesem Zusammenhang insbesondere ein Automat verstanden werden, der zu einer portionsweisen Ausgabe und/oder Zubereitung von Getränken, wie beispielsweise Kaffee, Tee, Kakao und/oder anderen Milchmischgetränken und/oder Aufbrühgetränken, vorgesehen ist. Vorzugsweise ist der Getränkeautomat als ein Kaffeeautomat, bevorzugt als ein Kaffee-Vollautomat ausgebildet. Vorzugsweise ist die Getränkepumpe als eine Schwingkolbenpumpe ausgebildet. Vorzugsweise weist die Getränkepumpe zumindest einen schwimmend gelagerten Arbeitskolben auf, der dazu vorgesehen ist, insbesondere von dem von der Polhülse geleiteten magnetischen Fluss angetrieben zu werden.

Insbesondere ist der Arbeitskolben zu einer anschlagfreien Bewegung in der Pumpkammer vorgesehen. Vorzugsweise ist der Arbeitskolben zu einer Bewegung zumindest im Wesentlichen parallel zu einer Mittelachse der Polhülse vorgesehen. Vorzugsweise ist die Getränkepumpe als eine Hochdruckschwingkolbenpumpe ausgebildet und dazu vorgesehen, einen Druck von wenigstens 10 bar, vorzugsweise von wenigstens 15 bar, bereitzustellen. Es ist auch denkbar, dass die Getränkepumpe als eine Niederdruckschwingkolbenpumpe ausgebildet und dazu vorgesehen ist, einen Druck von wenigstens 3 bar bereitzustellen. Insbesondere ist die Getränkepumpe als eine Haushaltsgeräteschwingkolbenpumpe ausgebildet. Vorzugsweise ist die Getränkepumpe als eine Getränkeautomatenpumpe ausgebildet. Vorzugsweise weist die Getränkepumpe einen Eisenkreis auf, der die zwei Polhülsen umfasst. Vorzugsweise sind die Polhülsen zumindest im Wesentlichen röhrenförmig ausgebildet. Bevorzugt ist die erste Polhülse beispielsweise als ein Drehteil ausgebildet und die zweite Polhülse beispielsweise als ein Rollteil. Es ist denkbar, dass die Polhülse geschlitzt ausgebildet ist, d.h. einen Schlitz aufweist, der sich in axialer Richtung erstreckt. Insbesondere weist die Getränkepumpe eine Pumpkammer auf, in welcher der Arbeitskolben geführt ist. Bevorzugt weist die Polhülse die Form eines Hohlzylinders und eine Mittelachse auf. Die Polhülse umgibt die Pumpkammer. Vorzugsweise ist die Polhülse außerhalb der Pumpkammer angeordnet. Richtungsbezeichnungen wie "axial", "radial", "in Umfangsrichtung" sollen bezogen auf eine Mittelachse der Pumpkammer und/oder bezogen auf die Mittelachse der Polhülse verstanden werden. Unter "axial" soll in Richtung der Mittelachse der Pumpkammer und/oder in Richtung der Mittelachse der Polhülse verstanden werden. Unter einer "Hauptströmungsrichtung" soll in diesem Zusammenhang insbesondere eine Richtung verstanden werden, in die sich die zu fördernde Flüssigkeit gemittelt über eine Zeit, beispielsweise über die Dauer einer Portionenausgabe, bewegt. Insbesondere entspricht die Hauptströmungsrichtung der axialen Richtung. Unter "axial entgegen einer Hauptströmungsrichtung" soll daher insbesondere in axialer Richtung der Hauptströmungsrichtung entgegengerichtet verstanden werden. Vorzugsweise soll darunter insbesondere eine stromaufwärts zeigende Richtung parallel zu der Mittelachse der Pumpkammer verstanden werden. Unter "radial" soll in diesem Zusammenhang insbesondere eine Richtung senkrecht zu der Mittelachse der Polhülse und/oder senkrecht zu der Mittelachse der Pumpkammer ausgehend von der jeweiligen Mittelachse nach außen verstanden werden. Unter "in Umfangsrichtung" soll in diesem Zusammenhang insbesondere eine entlang eines Kreisbogens um die Mittelachse der Polhülse und/oder um die Mittelachse der Pumpkammer in einer Ebene senkrecht zu der Mittelachse der Polhülse und/oder senkrecht zu der Mittelachse der Pumpkammer verstanden werden.

Unter einer "definierten Ruhelage" soll in diesem Zusammenhang insbesondere eine Lage des Arbeitskolbens in einem magnetisch unbetätigten Zustand verstanden werden. Vorzugsweise wird der Arbeitskolben in einem unbetätigten Zustand, insbesondere mittels Federn in der Ruhelage gehalten. Besonders bevorzugt ist der Arbeitskolben axial beidseitig, insbesondere mittels Federn, mit einer Haltekraft beaufschlagt, wobei Haltekräfte in der Ruhelage ausgeglichen sind. Darunter, dass "die zweite Polhülse in der definierten Ruhelage des Arbeitskolbens axial entgegen einer Hauptströmungsrichtung der Flüssigkeit eine Kontaktfläche zwischen dem Arbeitskolben und der Pumpkammer zumindest teilweise überragt" soll insbesondere verstanden werden, dass zumindest eine erste Ebene existiert, welche sich senkrecht zu der Mittelachse der Pumpkammer erstreckt und die zweite Polhülse, nicht jedoch die Kontaktfläche zwischen dem Arbeitskolben und der Pumpkammer in der definierten Ruhelage des Arbeitskolbens schneidet und axial entlang einer Hauptströmungsrichtung vor einer zweiten Ebene angeordnet ist, welche sich senkrecht zu der Mittelachse der Pumpkammer erstreckt und die zweite Polhülse und die Kontaktfläche zwischen dem Arbeitskolben und der Pumpkammer in der definierten Ruhelage des Arbeitskolbens schneidet. Vorzugsweise soll darunter insbesondere verstanden werden, dass zumindest ein Teilbereich der zweiten Polhülse in der definierten Ruhelage des Arbeitskolbens axial entgegen einer Hauptströmungsrichtung der Flüssigkeit über die Kontaktfläche zwischen dem Arbeitskolben und der Pumpkammer hinausragt. Bevorzugt kann die Polhülse sowohl einteilig als auch mehrteilig ausgebildet sein, wobei die Teile bei einer mehrteiligen Ausbildung insbesondere magnetisch miteinander gekoppelt sind und insbesondere in direktem Kontakt miteinander stehen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorzugsweise sind die erste Polhülse und die zweite Polhülse durch einen Spalt beabstandet angeordnet. Insbesondere umfasst ein Eisenkreis die erste Polhülse und die zweite Polhülse. Unter einem Spalt soll in diesem Zusammenhang insbesondere ein magnetisch isolierender Spalt verstanden werden. Vorzugsweise ist der Spalt in einem montierten Zustand von einem magnetischen Isolator erfüllt, wie beispielsweise Luft, Gummi, einem Kunststoff und/oder einem zellulosehaltigen Material. Vorzugsweise ist der axiale Randbereich in einem montierten Zustand an einem dem Spalt zugewandten Ende der Polhülse angeordnet. Vorzugsweise weist die zumindest eine zweite Polhülse eine Grundwandstärke auf, die der Grundwandstärke der ersten Polhülse entspricht. Vorzugsweise weisen die erste Polhülse und die zweite Polhülse einen gleichen Innenumfang auf. Vorzugsweise ist die erste Polhülse gegenüber der zweiten Polhülse einlassseitig angeordnet.

In einer vorteilhaften Ausgestaltung ist eine der ersten Polhülse zugewandte Stirnseite der zweiten Polhülse in der definierten Ruhelage des Arbeitskolbens axial entlang einer Hauptströmungsrichtung der Flüssigkeit vor einer strömungszugewandten Stirnseite des Arbeitskolbens angeordnet. Vorzugsweise erstecken sich die Stirnseite der zweiten Polhülse sowie die Stirnseite des Arbeitskolbens senkrecht zu der Mittelachse der Pumpkammer. Bevorzugt ist eine Ebene, welche sich senkrecht zu der Mittelachse der Pumpkammer erstreckt und in welcher die Stirnseite der zweiten Polhülse liegt, in der definierten Ruhelage des Arbeitskolbens frei von einem Schnitt durch den Arbeitskolben. Dadurch kann ein vorteilhafter Verlauf einer auf einen Anker wirkenden magnetischen Kraft erreicht werden. Es kann insbesondere ein vorteilhaftes Ansprechverhalten der Getränkepumpe erreicht werden. Insbesondere kann dadurch eine vorteilhafte Kennlinie der Getränkepumpe ermöglicht werden. Hierdurch können insbesondere Getränke, welche druckunabhängig abgegeben werden können, schnell gezapft werden. Gleichzeitig kann insbesondere im Bereich von Kaffee, wie insbesondere in einem Druckbereich zwischen 8 bar und 16 bar, ein nahezu konstanter Durchfluss erreicht werden. Hierdurch kann wiederum erreicht werden, dass sich unterschiedliche Strömungswiderstände, wie beispielsweise von verschiedenen Kapseln, nicht auf eine Bezugszeit auswirken.

Vorzugsweise ist eine axiale Erstreckung der zweiten Polhülse größer als eine axiale Erstreckung des wandgängigen Abschnitts des Arbeitskolbens. Bevorzugt erstreckt sich die zweite Polhülse über den wandgängigen Abschnitt des Arbeitskolbens hinweg, sodass die zweite Polhülse axial den wandgängigen Abschnitt des Arbeitskolbens beidseitig überragt. Besonders bevorzugt schneidet jede gedachte Ebene, welche sich senkrecht zu der Mittelachse der Pumpkammer erstreckt und den wandgängigen Abschnitt des Arbeitskolbens schneidet, auch die zweite Polhülse. Unter einem "wandgängigen Abschnitt des Arbeitskolbens" soll in diesem Zusammenhang insbesondere ein Abschnitt des Arbeitskolbens verstanden werden, der radial durch die Kontaktfläche zwischen dem Arbeitskolben und der Pumpkammer begrenzt ist. Vorzugsweise ist der Abschnitt axial durch zwei sich senkrecht zu der Mittelachse der Pumpkammer erstreckende Ebenen begrenzt. Bevorzugt entspricht eine axiale Erstreckung des Abschnitts einer axialen Erstreckung der Kontaktfläche zwischen dem Arbeitskolben und der Pumpkammer. Bevorzugt ist die Kontaktfläche insbesondere von einer Mantelfläche eines wandgängigen Abschnitts des Arbeitskolbens gebildet. Dadurch kann eine vorteilhafte Einwirkung einer magnetischen Kraft auf den Arbeitskolben, insbesondere aus der Ruhelage heraus, erreicht werden. Dadurch kann eine besonders effiziente Getränkepumpe bereitgestellt werden. Ferner kann dadurch insbesondere eine vorteilhaft schnelle Bewegung des Arbeitskolbens aus der definierten Ruhelage heraus erreicht werden.

Des Weiteren wird vorgeschlagen, dass ein in der Pumpkammer geführter Abschnitt des Arbeitskolbens zumindest zwei entgegengesetzte Anschlagsflächen aufweist, wobei ein axialer Abstand zwischen den Anschlagsflächen geringer ist, als eine axiale Erstreckung der zweiten Polhülse. Vorzugsweise ist eine erste Anschlagsfläche von der strömungszugewandten Stirnseite des Arbeitskolbens gebildet. Bevorzugt ist eine zweite Anschlagsfläche von der strömungsabgewandten Stirnseite des Arbeitskolbens gebildet, aus welcher ein Druckkolbenelement des Arbeitskolbens mit einem Förderkanal und einem Kolbenventil ragt. Besonders bevorzugt beträgt ein Wert der axialen Erstreckung der zweiten Polhülse weniger als 130%, vorzugsweise weniger als 120% und besonders bevorzugt weniger als 110% eines Werts des axialen Abstands zwischen den Anschlagsflächen. Dadurch kann insbesondere eine vorteilhaft geringe axiale Baulänge der Getränkepumpe, insbesondere bei ausreichender Effizienz, erreicht werden. Grundsätzlich wäre jedoch auch denkbar, dass, zu einer Verbesserung einer Wirkungsweise, insbesondere einer Effizienz, ein axialer Abstand zwischen den Anschlagsflächen gleich oder größer ist, als eine axiale Erstreckung der zweiten Polhülse.

Dies führt jedoch insbesondere zu einer Vergrößerung eines benötigten axialen Bauraums.

Zudem wird vorgeschlagen, dass eine der ersten Polhülse abgewandte Stirnseite der zweiten Polhülse in der definierten Ruhelage des Arbeitskolbens zumindest im Wesentlichen in einer Ebene mit der strömungsabgewandten, zweiten Anschlagsfläche des in der Pumpkammer geführten Abschnitts des Arbeitskolbens angeordnet ist. Vorzugsweise ist die der ersten Polhülse abgewandte Stirnseite der zweiten Polhülse in der definierten Ruhelage des Arbeitskolbens zumindest im Wesentlichen in einer sich senkrecht zu der Mittelachse der Pumpkammer erstreckenden Ebene mit der strömungsabgewandten, zweiten Anschlagsfläche des in der Pumpkammer geführten Abschnitts des Arbeitskolbens angeordnet. Unter "zumindest im Wesentlichen" soll in diesem Zusammenhang insbesondere verstanden werden, dass ein axialer Abstand zwischen der der ersten Polhülse abgewandten Stirnseite der zweiten Polhülse und der strömungsabgewandten, zweiten Anschlagsfläche des in der Pumpkammer geführten Abschnitts des Arbeitskolbens in der definierten Ruhelage des Arbeitskolbens maximal 10%, vorzugsweise maximal 5% und besonders bevorzugt maximal 1% einer axialen Erstreckung der zweiten Polhülse beträgt. Vorzugsweise ist die der ersten Polhülse abgewandte Stirnseite der zweiten Polhülse in der definierten Ruhelage des Arbeitskolbens axial auf Höhe der strömungsabgewandten, zweiten Anschlagsfläche des in der Pumpkammer geführten Abschnitts des Arbeitskolbens angeordnet. Dadurch kann eine vorteilhafte Einwirkung einer magnetischen Kraft auf den Arbeitskolben, insbesondere aus der Ruhelage heraus, erreicht werden. Dadurch kann eine besonders effiziente Getränkepumpe bereitgestellt werden. Ferner kann dadurch eine vorteilhafte Anordnung der zweiten Polhülse relativ zu dem Arbeitskolben erreicht werden.

In einer vorteilhaften Ausgestaltung weist die erste Polhülse in einem axialen Randbereich eine verminderte magnetische Leitfähigkeit auf. Dadurch kann eine Hubhöhe eines Ankers besonders vorteilhaft eingestellt werden. Es kann eine besonders flexibel anpassbare Getränkepumpe bereitgestellt werden. Unter einem "axialen Randbereich" soll in diesem Zusammenhang ein Bereich der ersten Polhülse verstanden werden, der von einem axialen Rand der ersten Polhülse begrenzt wird. Vorzugsweise ist der axiale Randbereich in einem montierten Zustand an einem bezogen auf die Hauptströmungsrichtung stromabwärts orientierten Ende der ersten Polhülse angeordnet.

Vorzugsweise ist der axiale Randbereich an einem auslassseitigen Ende der ersten Polhülse angeordnet. Bevorzugt ist der axiale Randbereich in der Ruhelage des Arbeitskolbens an einem dem Arbeitskolben zugewandten Ende der ersten Polhülse angeordnet. Vorzugsweise nimmt in dem axialen Randbereich die magnetische Leitfähigkeit in Richtung des Randes zumindest im Wesentlichen monoton ab. Bevorzugt nimmt in dem axialen Randbereich die magnetische Leitfähigkeit in Richtung des Randes zumindest im Wesentlichen stetig ab. Vorzugsweise weist der axiale Randbereich eine axiale Erstreckung mit einem Wert von wenigstens 2 mm auf. Bevorzugt weist der axiale Randbereich eine axiale Erstreckung mit einem Wert von höchstens 10 mm auf. Unter einer "magnetischen Leitfähigkeit" soll in diesem Zusammenhang insbesondere eine extensive Größe verstanden werden. Es ist denkbar, dass die extensive magnetische Leitfähigkeit aufgrund einer Abnahme einer intensiven magnetischen Leitfähigkeit abnimmt, beispielsweise aufgrund einer sich in axialer Richtung verändernden Stoffzusammensetzung in der ersten Polhülse. Vorzugsweise ist die erste Polhülse zumindest im Wesentlichen aus einem ferromagnetischen Material hergestellt. Vorzugsweise ist die erste Polhülse zumindest im Wesentlichen aus Stahl hergestellt, bevorzugt aus unlegiertem Qualitätsstahl. Es ist denkbar, dass die erste Polhülse in dem axialen Randbereich zumindest ein weiteres Material, beispielsweise eine Legierung und/oder einen Kunststoff aufweist. Vorzugsweise sind beide Polhülsen zumindest im Wesentlichen aus einem ferromagnetischen Material hergestellt. Vorzugsweise sind die Polhülsen zumindest im Wesentlichen aus Stahl hergestellt, bevorzugt aus unlegiertem Qualitätsstahl. Darunter, dass die magnetische Leitfähigkeit "vermindert" ist, soll in diesem Zusammenhang insbesondere verstanden werden, dass der Wert der magnetischen Leitfähigkeit in dem axialen Randbereich gegenüber einem davon differierenden Bereich um wenigstens 20 %, vorzugsweise um wenigstens 40 %, bevorzugt um wenigstens 60 % und besonders bevorzugt um wenigstens 80 % verringert ist.

Ferner wird vorgeschlagen, dass die erste Polhülse in dem axialen Randbereich eine verminderte Wandstärke aufweist. Vorzugsweise weist die erste Polhülse eine Grundwandstärke auf, gegenüber der die Wandstärke in dem axialen Randbereich vermindert ist. Dadurch kann eine besonders einfache Form der ersten Polhülse erreicht werden. Eine erste Polhülse kann aus einem zylindrischen Rohling hergestellt werden. Es kann ein besonders günstiger Herstellungsprozess erreicht werden. Dadurch kann eine in dem axialen Randbereich besonders stabil ausgebildete erste Polhülse bereitgestellt werden. Insbesondere weist die erste Polhülse ein axiales Schnittprofil auf, das in dem axialen Randbereich die verminderte Wandstärke aufweist. Unter einem "axialen Schnittprofil" soll in diesem Zusammenhang insbesondere ein Profil entlang eines Schnitts in einer Ebene parallel zu der Mittelachse der ersten Polhülse verstanden werden. Unter einer "verminderten" Wandstärke soll in diesem Zusammenhang insbesondere eine Wandstärke verstanden werden, die sich bezogen auf eine axiale Richtung ändert, insbesondere verjüngt. Vorzugsweise nimmt die Wandstärke in dem axialen Randbereich in Richtung des Randes zumindest im Wesentlichen monoton ab. Insbesondere weist die Wandstärke an mindestens zwei axial voneinander beabstandeten Punkten unterschiedliche Werte auf. Vorzugsweise weist das axiale Schnittprofil eine Symmetrieachse auf, die vorzugsweise mit der Mittelachse der erste Polhülse zusammenfällt. Bevorzugt ist die erste Polhülse zumindest im Wesentlichen rotationssymmetrisch ausgebildet. Unter einer "Grundwandstärke" soll insbesondere eine Wandstärke verstanden werden, die auf einem axialen Abschnitt zumindest im Wesentlichen konstant ist. Unter einer "konstanten Wandstärke" soll in diesem Zusammenhang insbesondere verstanden werden, dass die Wandstärke bezogen auf eine axiale Verschiebung konstant ist. Vorzugsweise ist die Grundwandstärke auf einem Viertel, bevorzugt auf einem Drittel, besonders bevorzugt auf einer Hälfte einer axialen Längserstreckung zumindest im Wesentlichen konstant. Unter "zumindest im Wesentlichen konstant" soll in diesem Zusammenhang insbesondere verstanden werden, mit Abweichungen um weniger als 2 %, vorzugsweise mit Abweichungen um weniger als 1 % und besonders bevorzugt mit Abweichungen um weniger als 0,5 %. Vorzugsweise weist die erste Polhülse eine maximale Randstärke auf, die der Grundwandstärke entspricht. Vorzugsweise beträgt die Grundwandstärke wenigstens 1,0 mm, bevorzugt wenigstens 2,0 mm, besonders bevorzugt wenigstens 2,5 mm und ganz besonders bevorzugt wenigstens 3,0 mm. Vorzugsweise ist in dem axialen Randbereich die Wandstärke zumindest im Wesentlichen durchgängig gegenüber einer Grundwandstärke und/oder gegenüber einer maximalen Wandstärke vermindert. Vorzugsweise wird der axiale Randbereich von zumindest einem Formelement, wie beispielsweise einer Nut, einer Stufe, und/oder einer Kante, insbesondere einer Kante einer Schräge, begrenzt. Vorzugsweise ist in axialer Richtung unmittelbar neben dem axialen Randbereich ein Bereich angeordnet, der die Grundwandstärke aufweist.

In einer vorteilhaften Ausgestaltung weist die erste Polhülse ein axiales Schnittprofil auf, das von einer Kraft-Weg-Kennlinie abgeleitet ist. Vorzugsweise weist das axiale Schnittprofil zumindest eine Schräge auf, die mit einer Mittelachse der ersten Polhülse einen Winkel von höchstens 30 Grad einschließt. Dadurch kann eine in vorteilhafter Weise flexibel einstellbare Getränkepumpe bereitgestellt werden. Eine Erwärmung der Getränkepumpe in einem Betrieb kann gering gehalten werden. Es kann eine gleichbleibende Leistung der Getränkepumpe erreicht werden. Es kann ein hoher Benutzerkomfort erreicht werden. Unter einer "Kraft-Weg-Kennlinie" soll in diesem Zusammenhang insbesondere eine Kennlinie und/oder Abhängigkeit verstanden werden, die eine auf einen Arbeitskolben der Schwingkolbenpumpe aufgrund eines magnetischen Flusses wirkende Kraft bezogen auf eine axiale Position des Arbeitskolbens wiedergibt. Vorzugsweise weist das Schnittprofil zumindest ein Formelement, insbesondere zumindest eine Stufe und/oder eine Schräge auf, mit zumindest einem geometrischen Parameter, der von der Kraft-Weg-Kennlinie abgeleitet ist. Vorzugsweise wird in einem Optimierungsverfahren die Wandstärke in dem Randbereich des axialen Schnittprofils, beispielsweise ausgehend von einem rechteckigen Schnittprofil, insbesondere durch Anfasen, vermindert und die Auswirkung auf die Kraft-Weg-Kennlinie und/oder auf eine Druck-Volumenstrom-Kennlinie der Schwingkolbenpumpe ausgewertet. In weiteren Verfahrensschritten wird die Wandstärke weiter vermindert, bis sich die Kraft-Weg-Kennlinie und/oder die Druck-Volumenstrom-Kennlinie der Schwingkolbenpumpe nicht weiter verbessern. Insbesondere wird eine maximal auf den Arbeitskolben bei einem Hub wirkende Kraft vermindert. Bevorzugt ist das axiale Schnittprofil von einem Wert und/oder von einer Steigung der Kraft-Weg-Kennlinie in einem Bereich des magnetisch isolierenden Spaltes und/oder von einem Wert und/oder von einer Steigung der Kraft-Weg-Kennlinie an dem Rand der ersten Polhülse abgeleitet.

Ferner wird vorgeschlagen, dass das axiale Schnittprofil zumindest eine Schräge und/oder eine mehrfache Stufung aufweist. Dadurch kann eine Form des magnetischen Flusses, insbesondere in einem Bereich des magnetisch isolierenden Spalts, in vorteilhafter Weise eingestellt werden. Es kann ein besonders günstiger Verlauf einer auf einen Arbeitskolben der Getränkepumpe wirkenden Magnetkraft, insbesondere in einem Bereich des magnetisch isolierenden Spalts, erreicht werden. Vorzugsweise weist die Wandstärke an einem dem magnetisch isolierenden Spalt zugewandten Rand der ersten Polhülse ein Minimum auf, das an einem Rand der Schräge angeordnet ist. Vorzugsweise verläuft die Wandstärke in dem axialen Wandbereich zumindest im Wesentlichen monoton, d.h. die Wandstärke wächst mit zunehmender Entfernung von dem Rand der ersten Polhülse. Vorzugsweise ist das axiale Schnittprofil von höchstens zwei konvexen Flächen ausgebildet, die bevorzugt spiegelsymmetrisch zueinander ausgebildet und angeordnet sind. Vorzugsweise sind die Schräge und/oder die mehrfache Stufung an einem Außenumfang der ersten Polhülse angeordnet. Es ist auch denkbar, dass die Schräge und/oder die mehrfache Stufung an einem Innenumfang der ersten Polhülse angeordnet sind. Es ist auch denkbar, dass das axiale Schnittprofil sowohl an einem Außenumfang als auch an einem Innenumfang jeweils zumindest ein Schräge und/oder eine mehrfache Stufung aufweist. Vorzugsweise weist das axiale Schnittprofil zumindest zwei Schrägen auf, die, insbesondere bezogen auf eine Symmetrieachse, symmetrisch zueinander ausgebildet und/oder angeordnet sind.

Ferner wird ein Haushaltsgerät, insbesondere Getränkeautomat, mit einer erfindungsgemäßen Getränkepumpe vorgeschlagen. Dadurch kann ein besonders effizientes Haushaltsgerät bereitgestellt werden. Eine Ausgabedauer kann über mehrere Portionsausgaben hinweg zumindest im Wesentlichen konstant gehalten werden. Es kann ein hoher Benutzerkomfort erreicht werden.

Die erfindungsgemäße Getränkepumpe und/oder das erfindungsgemäße Haushaltsgerät sollen/soll hierbei nicht auf die oben beschriebene Anwendung und Ausführungsform beschränkt sein. Insbesondere können/kann die erfindungsgemäße Handwerkzeugmaschinenvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie von Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Ansicht eines erfindungsgemäßen Haushaltsgeräts in einer schematischen Darstellung,
- Fig. 2: einen Schnitt entlang einer Längsachse durch eine Getränkepumpe des Haushaltsgeräts und
- Fig. 3: ein schematisches Diagramm einer Kennlinie des Volumenstroms abhängig von einem erzeugten Druck der Getränkepumpe.

### Beschreibung des Ausführungsbeispiels

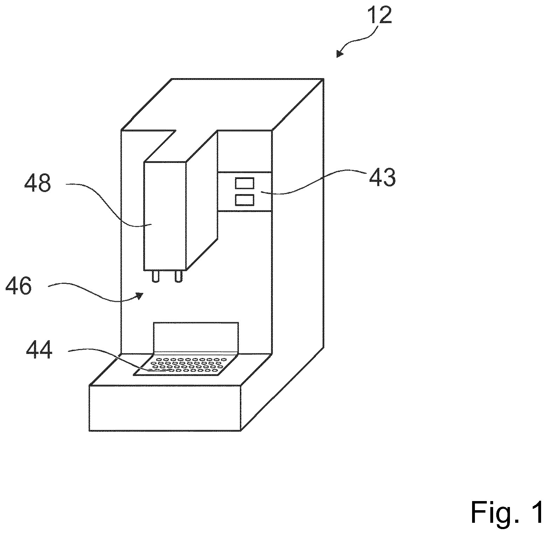

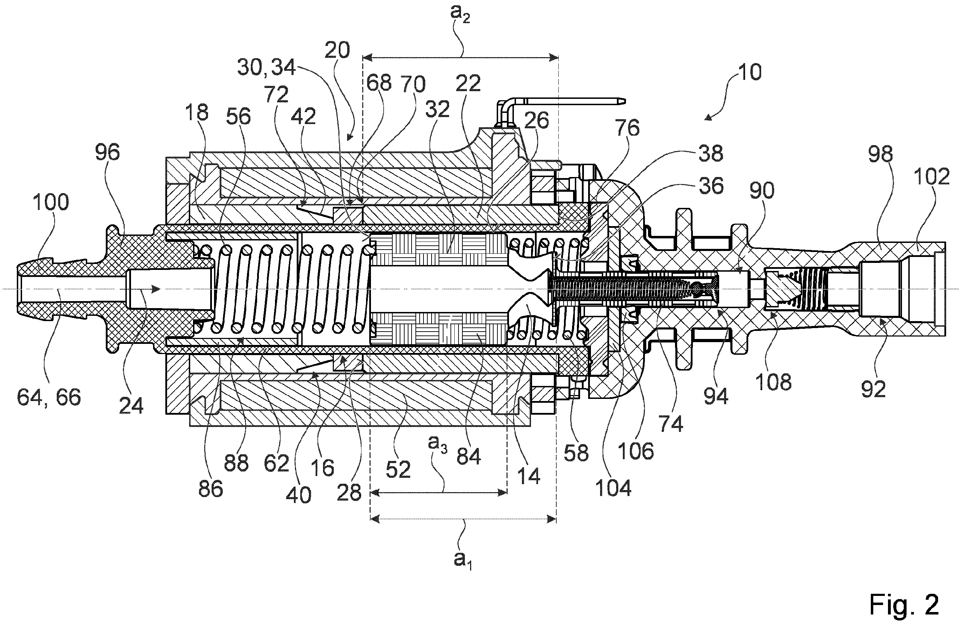

Figur 1 zeigt ein Haushaltsgerät 12, das als ein Getränkeautomat ausgebildet ist. Das Haushaltsgerät 12 ist in dem vorliegenden Ausführungsbeispiel dazu vorgesehen, Getränke portioniert zuzubereiten und Getränkeportionen auszugeben. Das Haushaltsgerät 12 ist als ein Kaffeevollautomat ausgebildet. Das Haushaltsgerät 12 umfasst nicht näher dargestellte Vorratsbehälter für Wasser und für Kaffee. Das Haushaltsgerät 12 weist eine Bedieneinheit 43 auf, die zu einer Benutzereingabe vorgesehen ist. Das Haushaltsgerät 12 umfasst einen Abstellrost 44 und eine Gefäßaufnahme 46. Das Haushaltsgerät 12 umfasst eine Ausgabeeinheit 48 zu einer Ausgabe von Getränkeportionen, insbesondere in ein in der Gefäßaufnahme 46 angeordnetes Gefäß. Das Haushaltsgerät 12 umfasst eine Getränkepumpe 10 (vgl. Figur 2). Die Getränkepumpe 10 ist zur Förderung einer Flüssigkeit, beispielsweise Wasser, unter einem Druck von wenigstens 12 bar vorgesehen. Die Getränkepumpe 10 ist dazu vorgesehen, Flüssigkeit gegen einen Staudruck von 12 bar zu fördern. Es ist denkbar, dass die Getränkepumpe 10 zur Förderung einer Flüssigkeit unter einem geringeren Druck, wie beispielsweise von wenigstens 8 bar, 7 bar oder 4 bar vorgesehen ist. Es ist auch denkbar, dass die Getränkepumpe 10 zur Förderung einer Flüssigkeit unter einem höheren Druck von beispielsweise 15 bar vorgesehen ist. Die Getränkepumpe 10 ist dazu vorgesehen, die Flüssigkeit in einer Hauptströmungsrichtung 24 zu fördern.

Die Getränkepumpe 10 umfasst einen Magnetaktor 20 mit einer Magnetspule 52. Die Getränkepumpe 10 umfasst einen Arbeitskolben 14. Der Magnetaktor 20 ist dazu vorgesehen, ein Magnetfeld zu einem Antrieb des Arbeitskolbens 14 bereitzustellen. Der Arbeitskolben 14 ist schwimmend gelagert. Die Getränkepumpe 10 umfasst zwei auf den Arbeitskolben 14 wirkende Federelemente 56, 58. Die Federelemente 56, 58 sind dazu vorgesehen, in einander entgegengesetzten Richtungen auf den Arbeitskolben 14 zu wirken. Eines der Federelemente 56 ist als eine Pumpfeder ausgebildet. Das als Pumpfeder ausgebildete Federelement 56 ist dazu vorgesehen, den Arbeitskolben 14 bei einem Druckhub anzutreiben. Das Federelement 56 ist als eine Schraubendruckfeder ausgebildet. Der Arbeitskolben 14 weist eine definierte Ruhelage auf. Der Arbeitskolben 14 befindet sich in einem magnetisch unbetätigten Zustand in einer definierten Ruhelage. Der Arbeitskolben 14 befindet sich in einem magnetisch unbetätigten Zustand durch den Magnetaktor 20 in einer definierten Ruhelage. Der Arbeitskolben 14 wird mittels der Federelemente 56, 58 in der definierten Ruhelage gehalten und/oder in die definierte Ruhelage bewegt. Die Ruhelage ist in der Figur 2 gezeigt. Die Getränkepumpe 10 weist eine Pumpkammer 16 auf, in welcher der Arbeitskolben 14 axial beweglich geführt ist. Die Pumpkammer 16 weist eine Pumpkammerwand 62 auf, die als eine Kolbenführung ausgebildet ist. Der Arbeitskolben 14 ist in der Pumpkammer 16 geführt und kontaktiert dazu zumindest abschnittsweise die Pumpkammer 16. Die Pumpkammer 16 durchsetzt das Spulengehäuse mit der Magnetspule 52. Die Magnetspule 52 ist dazu vorgesehen, ein Magnetfeld zu erzeugen, das teilweise die Pumpkammer 16 durchsetzt. Die Pumpkammer 16 ist in dem vorliegenden Ausführungsbeispiel zumindest im Wesentlichen zylindrisch ausgebildet. Die Pumpkammer 16 weist eine Mittelachse 64 auf, die einer Zylinderachse entspricht und die zumindest im Wesentlichen parallel zu der Hauptströmungsrichtung 24 ausgerichtet ist. Ferner entspricht die Mittelachse 64 der Pumpkammer 16

Zur Lenkung des Magnetfeldes umfasst die Getränkepumpe 10 einen Eisenkreis, welcher die Magnetspule 52 teilweise umgibt. Der Eisenkreis umfasst zumindest eine Polhülse 18, 22 zu einer Leitung eines von dem Magnetaktor 20 erzeugten magnetischen Flusses. Der Eisenkreis umfasst zwei voneinander getrennte Polhülsen 18, 22 zu einer Leitung eines von dem Magnetaktor 20 erzeugten magnetischen Flusses. Die erste Polhülse 18 ist zumindest im Wesentlichen in Form eines Hohlzylinders ausgebildet. Die erste Polhülse 18 weist eine Mittelachse 66 auf, die einer Zylinderachse entspricht. In einem montierten Zustand fallen die Mittelachse 64 der Pumpkammer 16 und die Mittelachse 66 der ersten Polhülse 18 zumindest im Wesentlichen zusammen. In einem montierten Zustand ist die erste Polhülse 18 koaxial zu der Pumpkammer 16 angeordnet. Die erste Polhülse 18 ist in dem vorliegenden Ausführungsbeispiel als ein Drehteil ausgebildet. Es ist denkbar, dass die erste Polhülse 18 nach einem anderen Verfahren hergestellt und beispielsweise als ein Rollteil ausgebildet ist. Die erste Polhülse 18 ist in dem vorliegenden Ausführungsbeispiel rotationssymmetrisch ausgebildet.

Die erste Polhülse 18 weist entlang der Hauptströmungsrichtung 24 der zu fördernden Flüssigkeit eine sich wesentlich verändernde magnetische Leitfähigkeit auf. Die erste Polhülse 18 weist in einem axialen Randbereich 40 eine verminderte magnetische Leitfähigkeit auf. Die erste Polhülse 18 weist in dem axialen Randbereich 40 ein vermindertes wirksames Wandmaterialvolumen auf. Die erste Polhülse 18 weist ein axiales Schnittprofil auf, das in dem axialen Randbereich 40 eine verminderte Wandstärke aufweist. Der axiale Randbereich 40 ist an einem axialen Rand der ersten Polhülse 18 angeordnet. Die erste Polhülse 18 weist an dem axialen Rand eine minimale Wandstärke auf. Die erste Polhülse 18 weist an dem axialen Rand eine minimale Wandstärke bezogen auf den Randbereich 40 auf. In dem vorliegenden Ausführungsbeispiel weist die erste Polhülse 18 an dem axialen Rand eine Wandstärke von zumindest im Wesentlichen 0,8 mm auf. Es ist denkbar, dass die erste Polhülse 18 an dem axialen Rand eine kleinere Wandstärke als 0,8 mm oder eine verschwindende Wandstärke aufweist. Es ist denkbar, dass die erste Polhülse 18 an dem axialen Rand eine Wandstärke aufweist, die größer als 0,8 mm ist. Die erste Polhülse 18 weist in dem vorliegenden Ausführungsbeispiel in dem axialen Randbereich 40 einen konischen Verlauf auf. Die Wandstärke nimmt in dem axialen Randbereich 40 mit einem Abstand von dem axialen Rand zu. Die Wandstärke nimmt in dem axialen Randbereich 40 mit einem Abstand von dem axialen Rand monoton zu.

Die erste Polhülse 18 weist eine Grundwandstärke auf, gegenüber der die Wandstärke in dem axialen Randbereich 40 vermindert ist. Die Wandstärke ist in dem axialen Randbereich 40 überall kleiner als die Grundwandstärke. Die erste Polhülse 18 weist außerhalb des axialen Randbereichs 40 einen weiteren Bereich auf, in dem die Wandstärke durchgängig der Grundwandstärke entspricht. Die Wandstärke ist in dem weiteren Bereich zumindest im Wesentlichen konstant. Der weitere Bereich weist eine axiale Erstreckung auf, die zumindest im Wesentlichen 80 % einer axialen Gesamterstreckung der ersten Polhülse 18 entspricht. Der weitere Bereich erstreckt sich über mehr als zwei Drittel einer axialen Gesamterstreckung der ersten Polhülse 18. Der weitere Bereich und der axiale Randbereich 40 umfassen die komplette erste Polhülse 18. Die Grundwandstärke entspricht einer maximalen Wandstärke der ersten Polhülse 18. Die Grundwandstärke weist in dem vorliegenden Ausführungsbeispiel einen Wert von zumindest im Wesentlichen 2,5 mm auf.

Das axiale Schnittprofil der ersten Polhülse 18 ist von einer Kraft-Weg-Kennlinie abgeleitet. Die Kraft-Weg-Kennlinie gibt die Abhängigkeit einer Magnetkraft bezogen auf eine axiale Position des Arbeitskolbens 14 wieder. Die Magnetkraft stellt der Magnetaktor 20 aufgrund eines von dem Magnetaktor 20 hervorgerufenen magnetischen Flusses bereit.

Das axiale Schnittprofil weist zumindest eine Schräge 42 auf. Die Schräge 42 ist in dem axialen Randbereich 40 des axialen Schnittprofils angeordnet. Die Schräge 42 legt den axialen Randbereich 40 fest. Die Schräge 42 erstreckt sich in axialer Richtung zumindest im Wesentlichen über den gesamten axialen Randbereich 40. Die erste Polhülse 18 weist an einem dem magnetisch isolierenden Spalt 68 zugewandten Rand eine durch die Schräge 42 gebildete Fase auf. Die Schräge 42 ist an einem Außenumfang des axialen Randbereichs 40 angeordnet. Es ist auch denkbar, dass die Schräge 42 an einem Innenumfang des axialen Randbereichs 40 angeordnet ist. Die Schräge 42 ist zumindest im Wesentlichen gerade ausgebildet. Der Randbereich 40 weist entlang der Schräge 42 eine zumindest im Wesentlichen konstante Neigung auf. Es ist denkbar, dass die Schräge 42 eine Krümmung aufweist und beispielsweise konkav oder konvex ausgebildet ist. Es ist auch denkbar, dass der axiale Randbereich 40 in axialer Richtung aufeinanderfolgende Abschnitte mit unterschiedlicher Neigung aufweist und/oder einen geknickten Außenumfang und/oder Innenumfang aufweist.

Die Schräge 42 weist eine axiale Erstreckung und eine radiale Erstreckung auf, die von der Kraft-Weg-Kennlinie abgeleitet ist. Das axiale Schnittprofil ist von einem Wert und/oder von einer Steigung der Kraft-Weg-Kennlinie in einem Bereich des magnetisch isolierenden Spalts 68 abgeleitet und/oder von einem Wert und/oder von einer Steigung der Kraft-Weg-Kennlinie an dem Rand der ersten Polhülse 18.

Der axiale Randbereich 40 weist eine axiale Erstreckung mit einem Wert von wenigstens 2 mm auf. Die erste Polhülse 18 weist in dem vorliegenden Ausführungsbeispiel eine axiale Erstreckung von zumindest im Wesentlichen 18 mm auf. Der axiale Randbereich 40 weist eine axiale Erstreckung auf, die wenigstens 20 % einer axialen Gesamterstreckung der ersten Polhülse 18 beträgt. Der axiale Randbereich 40 weist eine axiale Erstreckung mit einem Wert von höchstens 10 mm auf. Der axiale Randbereich 40 weist eine axiale Erstreckung auf, die höchstens 30 % einer Gesamterstreckung der ersten Polhülse 18 beträgt. In dem vorliegenden Ausführungsbeispiel weist der axiale Randbereich 40 eine axiale Erstreckung von zumindest im Wesentlichen 4,7 mm auf. Die axiale Erstreckung des axialen Randbereichs 40 beträgt zumindest im Wesentlichen 25 % einer axialen Gesamterstreckung der ersten Polhülse 18. Es ist denkbar, dass die axiale Erstreckung des Randbereichs 40 einen von 4,7 mm abweichenden Wert aufweist. Ein Verhältnis der axialen Erstreckung des axialen Randbereichs 40 zu der Wandstärke beträgt zumindest im Wesentlichen 1,9.

Die Schräge 42 des axialen Schnittprofils schließt mit der Mittelachse 66 der ersten Polhülse 18 einen Winkel von höchstens 30 Grad ein. Die Schräge 42 des axialen Schnittprofils schließt jeweils mit der Mittelachse 66 der ersten Polhülse 18 einen Winkel von wenigstens 10 Grad ein. Die Schräge 42 des axialen Schnittprofils schließt jeweils mit der Mittelachse 66 einen Winkel von zumindest im Wesentlichen 15 Grad ein.

Das axiale Schnittprofil umfasst zumindest eine Stufe 72, die eine Höhe von wenigstens 0,2 mm aufweist. Die Stufe 72 weist eine Höhe von zumindest im Wesentlichen 0,5 mm auf. Die Stufe 72 ist an dem Außenumfang der ersten Polhülse 18 angeordnet. Die Stufe 72 begrenzt den axialen Randbereich 40.

Die erste Polhülse 18 weist in dem vorliegenden Ausführungsbeispiel drei senkrecht zu der Mittelachse 66 ausgerichtete Stirnflächen auf. Eine erste der Stirnflächen grenzt an den Innenumfang der ersten Polhülse 18. Die erste Stirnfläche ist als ein Kreisring ausgebildet. Die erste Stirnfläche bildet den Rand der ersten Polhülse 18 aus. Die erste der Stirnflächen ist in einem montierten Zustand dem magnetisch isolierenden Spalt 68 zugewandt. Eine weitere der Stirnflächen weist eine gleiche Orientierung wie die erste Stirnfläche auf und grenzt an einen Außenumfang der ersten Polhülse 18. Die weitere Stirnfläche entspricht der Stufe 72 des axialen Schnittprofils. Die weitere Stirnfläche ist als ein Kreisring ausgebildet. Die erste Stirnfläche und die weitere Stirnfläche sind konzentrisch zueinander angeordnet. Die erste Stirnfläche und die weitere Stirnfläche sind durch den konischen Verlauf des Außenumfangs des axialen Randbereichs 40 miteinander verbunden. Eine dritte der Stirnflächen ist an einem weiteren Rand der ersten Polhülse 18 angeordnet. Die dritte Stirnfläche 82 ist in einem montierten Zustand dem magnetisch isolierenden Spalt 68 abgewandt angeordnet. Die dritte Stirnfläche grenzt an den Innenumfang und den Außenumfang der ersten Polhülse 18.

Das axiale Schnittprofil weist zumindest in dem axialen Randbereich 40 einen konstanten Innendurchmesser auf. Der Innenumfang der ersten Polhülse 18 ist in dem axialen Randbereich 40 zumindest im Wesentlichen glatt ausgebildet. Der Innenumfang der ersten Polhülse 18 ist in dem axialen Randbereich 40 in Form einer Zylindermantelfläche ausgebildet.

Die Getränkepumpe 10 weist eine zweite Polhülse 22 auf, die von der ersten Polhülse 18 beabstandet angeordnet ist. Der Eisenkreis der Getränkepumpe 10 weist eine zweite Polhülse 22 auf, die von der ersten Polhülse 18 beabstandet angeordnet ist. Die zweite Polhülse 22 ist zumindest im Wesentlichen in Form eines Hohlzylinders ausgebildet. Die zweite Polhülse 22 weist eine Mittelachse auf, die einer Zylinderachse sowie einer Mittelachse 66 der ersten Polhülse 18 entspricht. In einem montierten Zustand fallen die Mittelachse 64 der Pumpkammer 16 und die Mittelachse der zweiten Polhülse 22 zumindest im Wesentlichen zusammen. In einem montierten Zustand ist die zweite Polhülse 22 koaxial zu der ersten Polhülse 18 und zu der Pumpkammer 16 angeordnet. Die zweite Polhülse 22 ist in dem vorliegenden Ausführungsbeispiel als ein Rollteil ausgebildet. Es ist denkbar, dass die zweite Polhülse 22 nach einem anderen Verfahren hergestellt und beispielsweise als ein Drehteil ausgebildet ist. Die zweite Polhülse 22 ist in dem vorliegenden Ausführungsbeispiel rotationssymmetrisch ausgebildet.

Die zweite Polhülse 22 ist zu der ersten Polhülse 18 durch einen Spalt 68 beabstandet angeordnet. Die zweite Polhülse 22 ist zu einer Leitung eines von einem Magnetaktor 20 erzeugten magnetischen Flusses vorgesehen. Der Spalt 68 ist als ein magnetisch isolierender Spalt 68 ausgebildet. In dem Spalt 68 ist ein Distanzring aus einem nichtmagnetisierbaren Material angeordnet. Die erste Polhülse 18 und die zweite Polhülse 22 schließen den magnetisch isolierenden Spalt 68 in axialer Richtung zwischen sich ein. Der magnetisch isolierende Spalt 68 unterbricht den Eisenkreis. In einem montierten Zustand begrenzt der axiale Rand des axialen Randbereichs 40 den magnetisch isolierenden Spalt 68 des Eisenkreises. Der magnetisch isolierende Spalt 68 ist räumlich axial zwischen der ersten Polhülse 18 und der zweiten Polhülse 22 angeordnet. Der axiale Randbereich 40 der ersten Polhülse 18 ist auf einer dem magnetisch isolierenden Spalt 68 zugewandten Seite der ersten Polhülse 18 angeordnet. Die zweite Polhülse 22 schließt mit einer Stirnseite 28 an den Spalt 68 an. Die zweite Polhülse 22 weist eine Grundwandstärke auf, die der Grundwandstärke der ersten Polhülse 18 entspricht. Die erste Polhülse 18 und die zweite Polhülse 22 weisen eine gleiche Grundwandstärke auf. Die erste Polhülse 18 und die zweite Polhülse 22 sind koaxial zueinander angeordnet. Die erste Polhülse 18 und die zweite Polhülse 22 sind fluchtend zueinander angeordnet. Die erste Polhülse 18 und die zweite Polhülse 22 weisen einen gleichen Außendurchmesser auf. Die erste Polhülse 18 ist gegenüber der zweiten Polhülse 22 bezogen auf die Hauptströmungsrichtung 24 stromaufwärts angeordnet. Die erste Polhülse 18 ist gegenüber der zweiten Polhülse 22 einlassseitig angeordnet. In einem montierten Zustand ist eine axiale Erstreckung einer Anordnung bestehend aus der ersten Polhülse 18, dem magnetisch isolierenden Spalt 68 und der zweiten Polhülse 22 größer als eine axiale Erstreckung der Magnetspule 52.

Die erste Polhülse 18 und die zweite Polhülse 22 umgeben jeweils die Pumpkammer 16. Die erste Polhülse 18 und die zweite Polhülse 22 sind radial zwischen der Magnetspule 52 und der Pumpkammer 16 angeordnet. Die zweite Polhülse 22 weist an einem dem magnetisch isolierenden Spalt 68 zugewandten Rand eine Fase 70 auf. Die Fase 70 ist an einem Außenumfang der weiteren Polhülse 22 angeordnet. Die Fase 70 weist einen Winkel von zumindest im Wesentlichen 45 Grad auf. Es ist denkbar, dass die Fase 70 einen von 45 Grad abweichenden Winkel, beispielsweise einen flacheren Winkel oder einen steileren Winkel, gegenüber dem Außenumfang aufweist. Die Fase 70 weist eine Breite von zumindest im Wesentlichen 1,5 mm auf. Es ist denkbar, dass die Fase 70 eine größere Breite oder eine kleinere Breite aufweist. Es ist denkbar, dass die zweite Polhülse 22 fasenfrei ausgebildet ist.

Die zweite Polhülse 22 überragt in der definierten Ruhelage des Arbeitskolbens 14 axial entgegen der Hauptströmungsrichtung 24 der Flüssigkeit eine Kontaktfläche 26 zwischen dem Arbeitskolben 14 und der Pumpkammer 16 zumindest teilweise. Die zweite Polhülse 22 überragt in der definierten Ruhelage des Arbeitskolbens 14 eine Kontaktfläche 26 zwischen dem Arbeitskolben 14 und der Pumpkammer 16 axial entgegen der Hauptströmungsrichtung 24 der Flüssigkeit teilweise. Die Kontaktfläche 26 ist dabei von einer Mantelfläche eines wandgängigen Abschnitts 32 des Arbeitskolbens 14 gebildet. Die Kontaktfläche 26 ist dabei von einer Führungsfläche gebildet, über welche der Arbeitskolben 14 an der Pumpkammerwand 62 geführt ist. Eine der ersten Polhülse 18 zugewandte Stirnseite 28 der zweiten Polhülse 22 ist ferner in der definierten Ruhelage des Arbeitskolbens 14 axial entlang der Hauptströmungsrichtung 24 der Flüssigkeit vor einer strömungszugewandten Stirnseite 30 des Arbeitskolbens 14 angeordnet. Die Stirnseite 28 der zweiten Polhülse 22 sowie die Stirnseite 30 des Arbeitskolbens 14 erstrecken sich senkrecht zu der Mittelachse 64 der Pumpkammer 16. Eine Ebene, welche sich senkrecht zu der Mittelachse 64 der Pumpkammer 16 erstreckt und in welcher die Stirnseite 28 der zweiten Polhülse 22 liegt ist in der definierten Ruhelage des Arbeitskolbens 14 frei von einem Schnitt durch den Arbeitskolben 14.

Ein in der Pumpkammer 16 wandgängiger Abschnitt 32 des Arbeitskolbens 14 ist in der definierten Ruhelage des Arbeitskolbens 14 axial vollständig von der zweiten Polhülse 22 übergriffen. Der Arbeitskolben 14 ist in der definierten Ruhelage des Arbeitskolbens 14 vollständig von der zweiten Polhülse 22 umgriffen. Eine axiale Erstreckung a₂ der zweiten Polhülse 22 ist größer als eine axiale Erstreckung a₃ des wandgängigen Abschnitts 32 des Arbeitskolbens 14. Die zweite Polhülse 22 erstreckt sich axial über den wandgängigen Abschnitt 32 des Arbeitskolbens 13 hinweg, sodass die zweite Polhülse 22 axial den wandgängigen Abschnitt 32 des Arbeitskolbens 14 in der definierten Ruhelage des Arbeitskolbens 14 beidseitig überragt. Zudem ist der wandgängige Abschnitt 32 des Arbeitskolbens 14 in der definierten Ruhelage des Arbeitskolbens 14 radial vollständig von der zweiten Polhülse 22 umgeben. Das heißt insbesondere, dass jede gedachte Ebene, welche sich senkrecht zu der Mittelachse 64 der Pumpkammer 16 erstreckt und den wandgängigen Abschnitt 32 des Arbeitskolbens 14 schneidet auch die zweite Polhülse 22 schneidet.

Ferner weist ein in der Pumpkammer 16 geführter Abschnitt des Arbeitskolbens 14 zwei entgegengesetzte Anschlagsflächen 34, 36 auf, wobei ein axialer Abstand a₁ zwischen den Anschlagsflächen 34, 36 geringer ist, als eine axiale Erstreckung a₂ der zweiten Polhülse 22. Die erste Anschlagsfläche 34 ist dabei von der strömungszugewandten Stirnseite 30 des Arbeitskolbens 14 gebildet. Die zweite Anschlagsfläche 36 ist dabei von der strömungsabgewandten Stirnseite des Arbeitskolbens 14 gebildet, aus welcher ein Druckkolbenelement 74 des Arbeitskolbens 14 mit einem Förderkanal und einem Kolbenventil 94 ragt. Die zweite Anschlagsfläche 36 ist dazu vorgesehen, in einer Endposition an einer die Pumpkammer 16 abschließenden Endplatte 76 anzuschlagen. Ein Wert der axialen Erstreckung a₂ der zweiten Polhülse 22 beträgt in der gezeigten Ausgestaltung weniger als 110 % eines Werts des axialen Abstands a₁ zwischen den Anschlagsflächen 34, 36. Grundsätzlich wäre jedoch auch denkbar, dass der axiale Abstand a₁ zwischen den Anschlagsflächen 34, 36 zu einer Steigerung der Effizienz gleich oder insbesondere größer ausgeführt ist als eine axiale Erstreckung a₂ der zweiten Polhülse 22. Durch den geringeren axialen Abstand a₁ zwischen den Anschlagsflächen 34, 36 kann jedoch eine vorteilhaft geringe axiale Baulänge der Getränkepumpe 10 erreicht werden.

Des Weiteren ist eine der ersten Polhülse 18 abgewandte Stirnseite 38 der zweiten Polhülse 22 in der definierten Ruhelage des Arbeitskolbens 14 zumindest im Wesentlichen in einer Ebene mit der strömungsabgewandten, zweiten Anschlagsfläche 36 des in der Pumpkammer 16 geführten Abschnitts des Arbeitskolbens 14 angeordnet. Des Weiteren ist eine der ersten Polhülse 18 abgewandte Stirnseite 38 der zweiten Polhülse 22 in der definierten Ruhelage des Arbeitskolbens 14 in einer sich senkrecht zu der Mittelachse 64 der Pumpkammer 16 erstreckenden Ebene mit der strömungsabgewandten, zweiten Anschlagsfläche 36 des in der Pumpkammer 16 geführten Abschnitts des Arbeitskolbens 14 angeordnet.

Der Arbeitskolben 14 der Getränkepumpe 10 umfasst ein Ankerelement 84, das vollständig aus einem magnetisierbaren Material besteht. In der Ruhelage, d.h. bei abgeschalteter Magnetspule 52, weist das Ankerelement 84 eine Ruheposition auf, bei der es die zweite Polhülse 22 axial vollständig überlappt. In dem vorliegenden Ausführungsbeispiel beträgt in der Ruheposition des Ankerelements 84 ein Abstand des Ankerelements 84 von einem dem Ankerelement 84 zugewandten Rand der ersten Polhülse 18 zumindest im Wesentlichen 10 mm. Die axiale Erstreckung des axialen Randbereichs 40 beträgt zumindest im Wesentlichen 47 % des Abstands des Ankerelements 84 von einem dem Ankerelement 84 zugewandten Rand der ersten Polhülse 18 in der Ruheposition des Ankerelements 84. Wird die Magnetspule 52 bestromt, stellt sich ein magnetischer Fluss in dem Eisenkreis und dem Ankerelement 84 ein, wobei ein magnetischer Widerstand, welcher diesem magnetischen Fluss entgegenwirkt, insbesondere durch eine verbleibende Spaltbreite zwischen dem Ankerelement 84 und dem Eisenkreis bestimmt ist. Ein solches System ist bestrebt, einen Zustand einzunehmen, in dem der magnetische Widerstand minimal ist. Auf das Ankerelement 84 wirkt eine Betätigungskraft, welche das Ankerelement 84 aus seiner Ruheposition gegen eine Kraft des als Pumpfeder ausgebildeten Federelements 56 auslenkt. In dem vorliegenden Ausführungsbeispiel ist das Ankerelement 84 stoffschlüssig mit einem Grundkörper des Arbeitskolbens 14 verbunden. Das Ankerelement 84 ist von dem wandgängigen Abschnitt 32 gebildet.

Die Getränkepumpe 10 umfasst ein Flussleitelement 86, das dazu vorgesehen ist, den von dem Magnetaktor 20 erzeugten magnetischen Fluss zu leiten und/oder zu bündeln. Das Flussleitelement 86 ist dazu vorgesehen, eine auf das Ankerelement 84 wirkende magnetische Kraft zu verstärken. Das Flussleitelement 86 ist als eine Hülse ausgebildet. Das Flussleitelement 86 ist innerhalb der Pumpkammer 16 angeordnet. Das Flussleitelement 86 liegt in einem montierten Zustand an der Pumpkammerwand 62 an. Das Flussleitelement 86 ist radial zwischen dem als Pumpfeder ausgebildeten Federelement 56 und der Pumpkammerwand 62 angeordnet.

Zur Erzielung einer Pumpwirkung wird die Magnetspule 52 mit einer pulsförmigen Spannung bestromt, wodurch sich im Bereich der Pumpkammer 16 ein sich ständig veränderndes Magnetfeld einstellt. Das sich pulsförmig verändernde und durch die Polhülsen 18, 22 geleitete Magnetfeld bewirkt, dass der Arbeitskolben 14 mit ansteigender Stärke des Magnetfelds zunächst aus seiner Ruhestellung gegen die Kraft des als Pumpfeder ausgebildeten Federelements 56 ausgelenkt wird. Eine auf den Arbeitskolben 14 wirkende Magnetkraft, hängt von einer Felddichte am Ort des Ankerelements 84 ab, die wiederum insbesondere von der Form der Polhülsen 18, 22 bestimmt wird. Sobald Strom durch die Magnetspule 52 reduziert wird und damit die Stärke des Magnetfelds wieder abfällt, wird der Arbeitskolben 14 durch die Kraft des Federelements 56 in Richtung der Ruhestellung bewegt. Der Magnetspule 52 ist dabei vorzugsweise eine nicht näher dargestellte Diodeneinheit vorgeschaltet, wodurch die Magnetspule 52 lediglich mit einer Halbwelle einer Wechselspannung bestromt wird. In dem dargestellten Ausführungsbeispiel ist die Magnetspule 52 für eine Wechselspannung von 230 V bei 50 Hz vorgesehen.

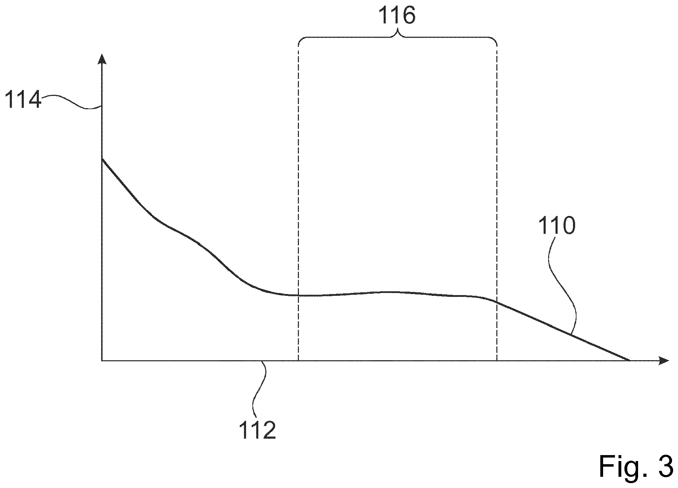

Zumindest abhängig von der Form der Polhülsen 18, 22 kann dabei insbesondere eine definierte Kennlinie 110 der Getränkepumpe 10 erreicht werden. In der Figur 3 ist ein schematisches Diagramm einer Kennlinie 110 der Getränkepumpe 10 dargestellt. Das Diagramm weist eine Abszissenachse 112 auf. Auf der Abszissenachse 112 ist der Druck der Getränkepumpe 10 aufgetragen. Ferner zeigt das Diagramm eine Ordinatenachse 114. Auf der Ordinatenachse 114 ist ein Volumenstrom, also insbesondere ein Druckfluss, der Getränkepumpe 10 aufgetragen. Die Getränkepumpe 10 weist dabei insbesondere eine Kennlinie 110 auf, mittels der Getränke, bei denen es nicht auf den Druck ankommt, schnell gezapft werden können, wohingegen der Bereich 116 von Kaffee, also insbesondere beispielsweise zwischen 8 bar und 16 bar, einen nahezu konstanten Druckfluss aufweist. Hierdurch kann erreicht werden, dass sich unterschiedliche Strömungswiderstände von z.B. eingelegten Kapseln und/oder verschieden gemahlenem Kaffee nicht auf die Bezugszeit auswirkt.

Die Pumpkammer 16 umfasst bei einem montierten Arbeitskolben 14 eine Vorkammer 88, eine Druckkammer 90 und eine Auslasskammer 92. Der Arbeitskolben 14 umfasst das Kolbenventil 94, das strömungstechnisch zwischen der Vorkammer 88 und der Druckkammer 90 angeordnet ist. Das Kolbenventil 94 ist bezogen auf eine Längsachse der Getränkepumpe 10 zentral in der Getränkepumpe 10 und zentral in dem Arbeitskolben 14 angeordnet. Das Kolbenventil 94 ist an einem dem Ankerelement 84 angewandten Ende des Druckkolbenelements 74 angeordnet. Das Kolbenventil 94 ist in Form eines Rückschlagventils ausgebildet, welches eine Durchlassrichtung von der Vorkammer 88 in die Druckkammer 90 aufweist. Das Kolbenventil 94 umfasst einen Ventilsitz, ein Verschlussteil und eine Schließfeder. Die Schließfeder ist dazu vorgesehen, das Verschlussteil auf den Ventilsitz zu ziehen. In einem Füllhub, bei dem der Arbeitskolben 14 durch das Magnetfeld entgegen der Kraft des als Pumpfeder ausgebildeten Federelements 56 bewegt wird, strömt Fluid von der Vorkammer 88 durch das Kolbenventil 94 in die Druckkammer 90. In einem anschließenden Druckhub, bei dem der Arbeitskolben 14 durch die Kraft des Federelements 56 bewegt wird, wird das Fluid aus der Druckkammer 90 herausgedrückt. Der Maximaldruck, der dabei auf das Fluid wirkt, hängt insbesondere von der Kraft des Federelements 56 ab. Ein Weg, um den der Arbeitskolben 14 dabei bewegt wird, hängt von einer Ausgestaltung der Getränkepumpe 10, insbesondere von der Form der Polhülsen 18, 22, ab.

Die Getränkepumpe 10 weist zwei Anschlusselemente 96, 98 auf. Ein erstes der Anschlusselemente 96 ist als ein Einlasselement ausgebildet und zu einem Anschluss an eine Wasserzuführung, beispielsweise an einen Wasservorratsbehälter, vorgesehen. Das erste Anschlusselement 96 weist einen Anschlussstutzen 100 zu einem Anschluss an einen Schlauch auf. Es ist denkbar, dass das erste Anschlusselement 96 eine Anschlusskupplung aufweist. Ein weiteres der Anschlusselemente 98 ist als ein Auslasselement ausgebildet und weist eine Anschlusskupplung 102 auf. Es ist denkbar, dass das weitere Anschlusselement 98 einen Anschlussstutzen aufweist.

Das weitere der Federelemente 58 ist als ein Dämpfungselement ausgebildet. Das weitere der Federelemente 58 ist in dem vorliegenden Ausführungsbeispiel als eine Schraubenfeder ausgebildet. Der Arbeitskolben 14 ist schwimmend zwischen den beiden Federelementen 56, 58 gelagert. Der Arbeitskolben 14 ist zumindest im Wesentlichen ununterbrochen mit beiden Federelementen 56, 58 in Kontakt. Es ist denkbar, dass das weitere der Federelemente 58 als ein anderes elastisches Element ausgebildet ist, beispielsweise als ein Balgelement und/oder als ein poröses Element. Die Getränkepumpe 10 umfasst einen Lagerring 104 für ein Dichtelement 106. Das Dichtelement 106 ist zu einer Dichtung der Vorkammer 88 gegenüber der Druckkammer 90 vorgesehen. In einem montierten Zustand durchdringt der Arbeitskolben 14 den Lagerring 104. Das Dichtelement 106 bildet zusammen mit dem Arbeitskolben 14 eine Gleitdichtung aus.

Die Getränkepumpe 10 umfasst ein Auslassventil 108, das in der Auslasskammer 92 angeordnet ist. Die Auslasskammer 92 wird von dem weiteren Anschlusselement 98 ausgebildet. Das Auslassventil 108 ist strömungstechnisch zwischen der Druckkammer 90 und der Auslasskammer 92 der Getränkepumpe 10 angeordnet. Das Auslassventil 108 ist, bezogen auf die Längsachse der Getränkepumpe 10, zentral in der Getränkepumpe 10 und zentral in der Auslasskammer 92 angeordnet. Die Auslasskammer 92 ist strömungstechnisch zwischen der Druckkammer 90 und einer Auslassöffnung angeordnet. Das Auslassventil 108 ist als ein Rückschlagventil ausgebildet, welches eine Durchlassrichtung von der Druckkammer 90 zu der Auslasskammer 92 aufweist. Das Druckkammerelement weist eine kreisförmige Öffnung auf, die einen Ventilsitz für das Auslassventil 108 ausbildet. Das Auslassventil 108 umfasst ein axial beweglich gelagertes Verschlussteil und eine Schließfeder, die in einem montierten Zustand das Verschlussteil gegen den Ventilsitz drückt.

### Bezugszeichen

- 10: Getränkepumpe
- 12: Haushaltsgerät
- 14: Arbeitskolben
- 16: Pumpkammer
- 18: Polhülse
- 20: Magnetaktor
- 22: Polhülse
- 24: Hauptströmungsrichtung
- 26: Kontaktfläche
- 28: Stirnseite
- 30: Stirnseite
- 32: Abschnitt
- 34: Anschlagsfläche
- 36: Anschlagsfläche
- 38: Stirnseite
- 40: Randbereich
- 42: Schräge
- 43: Bedieneinheit
- 44: Abstellrost
- 46: Gefäßaufnahme
- 48: Ausgabeeinheit
- 52: Magnetspule
- 56: Federelement
- 58: Federelement
- 62: Pumpkammerwand
- 64: Mittelachse
- 66: Mittelachse
- 68: Spalt
- 70: Fase
- 72: Stufe
- 74: Druckkolbenelement
- 76: Endplatte
- 84: Ankerelement
- 86: Flussleitelement
- 88: Vorkammer
- 90: Druckkammer
- 92: Auslasskammer
- 94: Kolbenventil
- 96: Anschlusselement
- 98: Anschlusselement
- 100: Anschlussstutzen
- 102: Anschlusskupplung
- 104: Lagerring
- 106: Dichtelement
- 108: Auslassventil
- 110: Kennlinie
- 112: Abszissenachse
- 114: Ordinatenachse
- 116: Bereich

- a₁: Abstand
- a₂: Erstreckung
- a₃: Erstreckung

## Patentansprüche

1. Getränkepumpe für ein Haushaltsgerät (12), insbesondere für einen Getränkeautomaten, zu einer Förderung einer Flüssigkeit, mit einem Arbeitskolben (14), welcher sich in einem magnetisch unbetätigten Zustand in einer definierten Ruhelage befindet, mit einer Pumpkammer (16), in welcher der Arbeitskolben (14) axial beweglich geführt ist, mit einem Magnetaktor (20) der dazu vorgesehen ist, ein Magnetfeld zu einem Antrieb des Arbeitskolbens (14) bereitzustellen, mit zumindest einer ersten Polhülse (18) zu einer Leitung eines von dem Magnetaktor (20) erzeugten magnetischen Flusses und mit zumindest einer zweiten Polhülse (22), die von der ersten Polhülse (18) beabstandet angeordnet ist, zu einer Leitung eines von einem Magnetaktor (20) erzeugten magnetischen Flusses,
**dadurch gekennzeichnet, dass**
die zweite Polhülse (22) in der definierten Ruhelage des Arbeitskolbens (14) axial entgegen einer Hauptströmungsrichtung (24) der Flüssigkeit eine Kontaktfläche (26) zwischen dem Arbeitskolben (14) und der Pumpkammer (16) zumindest teilweise überragt, wobei ein in der Pumpkammer (16) wandgängiger Abschnitt (32) des Arbeitskolbens (14) in der definierten Ruhelage des Arbeitskolbens (14) axial vollständig von der zweiten Polhülse (22) übergriffen ist.

2. Getränkepumpe nach Anspruch 1,
**dadurch gekennzeichnet, dass**
eine der ersten Polhülse (18) zugewandte Stirnseite (28) der zweiten Polhülse (22) in der definierten Ruhelage des Arbeitskolbens (14) axial entlang der Hauptströmungsrichtung (24) der Flüssigkeit vor einer strömungszugewandten Stirnseite (30) des Arbeitskolbens (14) angeordnet ist.

3. Getränkepumpe nach einem der vorhergehenden Ansprüche,
**dadurch gekennzeichnet, dass**
ein in der Pumpkammer (16) geführter Abschnitt des Arbeitskolbens (14) zumindest zwei entgegengesetzte Anschlagsflächen (34, 36) aufweist, wobei ein axialer Abstand (a₁) zwischen den Anschlagsflächen (34, 36) geringer ist, als eine axiale Erstreckung (a₂) der zweiten Polhülse (22).

4. Getränkepumpe nach Anspruch 3,
**dadurch gekennzeichnet, dass**
eine der ersten Polhülse (18) abgewandte Stirnseite (38) der zweiten Polhülse (22) in der definierten Ruhelage des Arbeitskolbens (14) zumindest im Wesentlichen in einer Ebene mit der strömungsabgewandten, zweiten Anschlagsfläche (36) des in der Pumpkammer (16) geführten Abschnitts des Arbeitskolbens (14) angeordnet ist.

5. Getränkepumpe nach einem der vorhergehenden Ansprüche,
**dadurch gekennzeichnet, dass**
die erste Polhülse (18) in einem axialen Randbereich (40) eine verminderte magnetische Leitfähigkeit aufweist.

6. Getränkepumpe nach Anspruch 5,
**dadurch gekennzeichnet, dass**
die erste Polhülse (18) in dem axialen Randbereich (40) eine verminderte Wandstärke aufweist.

7. Getränkepumpe nach einem der vorhergehenden Ansprüche,
**dadurch gekennzeichnet, dass**
die erste Polhülse (18) ein axiales Schnittprofil aufweist, das von einer Kraft-Weg-Kennlinie abgeleitet ist.

8. Getränkepumpe nach Anspruch 7,
**dadurch gekennzeichnet, dass**
das axiale Schnittprofil zumindest eine Schräge (42) und/oder eine mehrfache Stufung aufweist.

9. Haushaltsgerät, insbesondere Getränkeautomat, mit einer Getränkepumpe (10) nach einem der vorhergehenden Ansprüche.

## Claims

1. Beverage pump for a domestic appliance (12), in particular for a beverage dispenser machine, for conveying a liquid,
with a work piston (14) which is in a defined rest state in a magnetically inactive state,
with a pump chamber (16) in which the work piston (14) is guided in an axially mobile manner,
with a magnetic actuator (20), which is configured to provide a magnetic field for driving the work piston (14),
with at least one first pole sleeve (18) for conducting a magnetic flux generated by the magnetic actuator (20) and with at least one second pole sleeve (22), which is arranged spaced apart from the first pole sleeve (18), for conducting a magnetic flux generated by a magnetic actuator (20),
**characterised in that,** in the defined rest position of the work piston (14), the second pole sleeve (22) at least partially protrudes, axially counter to a main flow direction (24) of the liquid, beyond a contact surface (26) between the work piston (14) and the pump chamber (16),
wherein, in the defined rest position of the work piston (14), a section (32) of the work piston (14), running close to a wall in the pump chamber (16), is axially completely engaged over by the second pole sleeve (14).

2. Beverage pump according to claim 1,
**characterised in that,** in the defined rest position of the work piston (14), a front face (28) of the second pole sleeve (22) that faces toward the first pole sleeve (18) is arranged axially along the main flow direction (24) of the liquid before a front face (30) of the work piston (14) that faces towards the flow.

3. Beverage pump according to one of the preceding claims,
**characterised in that** a section of the work piston (14) that is guided in the pump chamber (16) comprises at least two opposed abutment surfaces (34, 36), wherein an axial distance (a₁) between the abutment surfaces (34, 36) is smaller than an axial extension (a₂) of the second pole sleeve (22).

4. Beverage pump according to claim 3,
**characterised in that,** in the defined rest position of the work piston (14), a front face (38) of the second pole sleeve (22) that faces away from the first pole sleeve (18) is arranged at least substantially in a plane with the second abutment surface (36) of the section of the work piston (14) that is guided in the pump chamber (16), said second abutment surface (36) facing away from the flow.

5. Beverage pump according to one of the preceding claims,
**characterised in that** the first pole sleeve (18) has a reduced magnetic permeability in an axial edge region (40).

6. Beverage pump according to claim 5,
**characterised in that** the first pole sleeve (18) has a reduced wall thickness in the axial edge region (40).

7. Beverage pump according to one of the preceding claims,
**characterised in that** the first pole sleeve (18) has an axial section profile that is derived from a force-displacement characteristic.

8. Beverage pump according to claim 7,
**characterised in that** the axial section profile comprises at least one slope (42) and/or a multiple stepping (30b).

9. Domestic appliance, in particular beverage dispenser machine, with a beverage pump (10) according to one of the preceding claims.

## Revendications

1. Pompe à boisson pour un appareil ménager (12), notamment pour une machine à boissons, pour un convoyage d'un liquide,
avec un piston de travail (14) qui est dans une position de repos définie en état magnétiquement inactif,
avec une chambre de pompe (16), dans laquelle le piston de travail (14) est guidé d'une manière axialement mobile,
avec un actionneur magnétique (20) qui est prévu à fournir un champ magnétique pour un entraînement du piston de travail (14),
avec au moins un premier épanouissement polaire (18) pour conduire un flux magnétique généré par l'actionneur magnétique (20) et avec au moins un deuxième épanouissement polaire (22), qui est écarté du premier épanouissement polaire (18), pour conduire un flux magnétique généré par un actionneur magnétique (20), **caractérisée en ce que** dans la position de repos définie du piston de travail (14) le deuxième épanouissement polaire (22) au moins partiellement dépasse une surface de contact (26) entre le piston de travail (14) et la chambre de pompe (16) axialement contre une direction principale d'écoulement (24) du liquide,
une section près-de-paroi (32) du piston de travail (14) dans la chambre de pompe (16) étant axialement complétement saisie par le deuxième épanouissement polaire (22) dans la position de repos définie du piston de travail (14).

2. Pompe à boisson selon la revendication 1,
**caractérisée en ce que** dans la position de repos définie du piston de travail (14) une face frontale (28) du deuxième épanouissement polaire (22), qui fait face au premier épanouissement polaire (18), est disposée axialement le long de la direction principale d'écoulement (24) du liquide avant une face frontale (30) du piston de travail (14), faisant face à l'écoulement.

3. Pompe à boisson selon l'une quelconque des revendications précédentes,
**caractérisée en ce qu'**une section du piston de travail (14) guidée dans la chambre de pompe (16) comporte au moins deux surfaces de butée (34, 36) opposées, une distance axiale (a₁) entre les surfaces de butée (34, 36) étant inférieure à une étendue axiale (a₂) du deuxième épanouissement polaire (22).

4. Pompe à boisson selon la revendication 3,
**caractérisée en ce que** dans la position de repos définie du piston de travail (14) une face frontale (38) du deuxième épanouissement polaire (22) à l'opposé du premier épanouissement polaire (18) est disposée au moins sensiblement dans un plan avec la deuxième surface de butée (36) de la section du piston de travail (14) guidée dans la chambre de pompe (16), ladite deuxième surface de butée (36) étant détournée de l'écoulement.

5. Pompe à boisson selon l'une quelconque des revendications précédentes,
**caractérisée en ce que** le premier épanouissement polaire (18) présente une perméabilité magnétique réduite dans une zone périphérique axiale (40).

6. Pompe à boisson selon la revendication 5,
**caractérisée en ce que** le premier épanouissement polaire (18) présente une épaisseur de paroi réduite dans la zone périphérique axiale (40).

7. Pompe à boisson selon l'une quelconque des revendications précédentes,
**caractérisée en ce que** le premier épanouissement polaire (18) présente un profil de coupe axial dérivé d'un caractéristique force-déplacement.

8. Pompe à boisson selon la revendication 7,
**caractérisée en ce que** le profil de coupe axial comporte au moins une pente (42) et/ou un échelonnage multiple.

9. Appareil ménager, notamment machine à boissons, avec une pompe à boisson (10) selon l'une quelconque des revendications précédentes.
